# EUROPÄISCHE PATENTANMELDUNG

(11) **EP 1 728 452 A1**
(43) Veröffentlichungstag der Anmeldung: **06.12.2006**
(21) Anmeldenummer: 06010721.6
(22) Anmeldetag: 24.05.2006
(51) Int. Cl.: A47B 47/00, F16B 12/14

(54) **Verbindungselement zum Herstellen von Möbelstücken**

(30) Priorität: 31.05.2005 DE 102005025368
(71) Anmelder: Flötotto Brand GmbH, 33335 Gütersloh (DE)
(72) Erfinder: Kolberg, Justus, 20249 Hamburg (DE)
(74) Vertreter: Wenzel & Kalkoff

(57) **Zusammenfassung**

Die Erfindung betrifft ein Möbelstück sowie ein Verbindungselement zum Herstellen von Möbelstücken aus flächigen Elementen, mit mindestens einer ersten Anschlussfläche und einer zweiten Anschlussfläche, die jeweils zur Befestigung einer Stirnseite eines Elements ausgebildet sind. Um ein Verbindungselement bereitzustellen, das einerseits die stabile Verbindung von flächigen Elementen zur Herstellung eines Möbelstücks und andererseits die zerstörungsfreie Verbindung von mit dem Verbindungselementen hergestellten Möbelstücken sowie die Anbindung von Funktionsteilen ohne Zerstörung der flächigen Elemente ermöglicht, und um ein Möbelstück bereitzustellen, das die lösbare Anbindung weiterer Möbelstücke sowie verschiedener Funktionsteile erlaubt, ist vorgesehen, dass an dem Verbindungselement mindestens eine Aufnahme zur lösbaren Befestigung eines weiteren Verbindungselements und/oder eines Funktionsteils ausgebildet ist.

## Beschreibung

Die Erfindung betrifft ein Verbindungselement zum Herstellen von Möbelstücken aus flächigen Elementen, mit mindestens einer ersten Anschlussfläche und einer zweiten Anschlussfläche, die jeweils zur Befestigung einer Stirnseite eines Elements ausgebildet sind. Die Erfindung betrifft ferner ein Möbelstück mit vier flächigen Elementen, die mit Verbindungselementen derart aneinander befestigt sind, dass sie einen kastenförmigen Körper bilden.

Bekannte Verbindungselemente der eingangs genannten Art werden bei der Herstellung von Möbelstücken, wie Schränken, Regalen, Anrichten oder dergleichen dazu verwendet, um die in der Regel aus zumindest vier flächigen Elementen, nämlich zwei Seitenwänden sowie einer Oberseite und einer Unterseite hergestellten Möbelstücke, an ihren Stirnseiten zu verbinden, so dass sie einen kastenförmigen Korpus bilden. Die Ausgestaltung der Verbindungselemente erfolgte bisher nur mit der Maßgabe, eine möglichst stabile Verbindung der flächigen Elemente, bspw. Faserplatten, Bretter oder dergleichen, zu gewährleisten, um somit eine gute Ausnutzung des bereitgestellten Stauraums zu ermöglichen und auf ggf. erforderliche Versteifungselemente verzichten zu können.

Um die mit den derzeit bekannten Verbindungselementen hergestellten Möbelstücke jedoch mit weiteren, vorzugsweise gleichartigen Möbelstücken zu kombinieren, ist es derzeit erforderlich, die flächigen Elemente irreversibel zu bearbeiten. Die Verwendung von Verbindungsschrauben, welche einen stabilen Verbund aus einzelnen Möbelstücken gewährleisten, macht es bspw. erforderlich, entsprechende Bohrungen anzubringen. Auch die stabile Anordnung verschiedener Funktionsteile, wie Rollen, Bügeln, Distanzelementen, Füßen oder dergleichen an dem Möbelstück, setzt das Vorhandensein entsprechender Aufnahmen an den flächigen Elementen voraus. Im ungünstigsten Fall müssen die Funktionsteile mit den flächigen Elementen verschraubt werden, wodurch diese beschädigt werden. Eine spätere, andersartige Verwendung des Möbelstückes ist dann nur eingeschränkt möglich.

Der Erfindung liegt die Aufgabe zugrunde, ein Verbindungselement bereitzustellen, das einerseits die stabile Verbindung von flächigen Elementen zur Herstellung eines Möbelstücks und andererseits die zerstörungsfreie Verbindung von mit dem Verbindungselementen hergestellten Möbelstücken sowie die Anbindung von Funktionsteilen ohne Zerstörung der flächigen Elemente ermöglicht. Der Erfindung liegt ferner die Aufgabe zugrunde, ein Möbelstück bereitzustellen, das die lösbare Anbindung weiterer Möbelstücke sowie verschiedener Funktionsteile erlaubt.

Diese Aufgabe wird erfindungsgemäß durch ein Verbindungselement mit den Merkmale des Anspruchs 1 sowie ein Möbelstück mit den Merkmalen des Anspruchs 12 gelöst. Weitere vorteilhafte Ausgestaltungen sind in den abhängigen Ansprüchen angegeben.

Kennzeichnend für das erfindungsgemäße Verbindungselement ist mindestens eine an diesem angeordnete Aufnahme zur lösbaren Befestigung eines weiteren Verbindungselements und/oder eines Funktionsteils. Diese Lösung hat den Vorteil, dass ein unter Verwendung des erfindungsgemäßen Verbindungselements hergestelltes Möbelstück eine hohe Variabilität aufweist. Durch die Verwendung von an die erfindungsgemäße Aufnahme angepassten Funktionsteilen, kann ein solches Möbelstück zerstörungsfrei mit weiteren Möbelstücken verbunden oder mit Funktionselementen ausgestattet werden. Für den Fall, dass das Möbelstück in einer anderen Weise verwendet werden soll, kann dieses durch einfaches Entfernen der Funktionsteile, bzw. der angeschlossenen Möbelstücke in seinen Ursprungszustand zurückversetzt werden, ohne dass Beschädigungen an dem Möbelstück zurückbleiben, die die weitere Verwendung einschränken würden.

Die erfindungsgemäße Lösung weist ferner den Vorteil auf, dass die Stabilität der Verbindung mit den Funktionsteilen, bzw. entsprechender Möbelstücke untereinander, nicht von der Wahl des Materials für die flächigen Elemente, sondern allein von den Verbindungselementen abhängig ist, die in der Regel aus einem Material mit höherer Festigkeit, bspw. einem Metall gefertigt sind, welches auch die Ausgestaltung der Aufnahme mit einem Gewinde ermöglicht.

Die für eine Möbelserie verwendeten Verbindungselemente können vorzugsweise eine standardisierte Aufnahme aufweisen. Darüber hinaus kann die Aufnahme zur Verbesserung der Optik zur Anordnung eines Blendelements ausgestaltet sein, so dass die Aufnahme bei deren Nichtverwendung nicht den Gesamteindruck des Möbelstücks stört.

Die Anbindung der Stirnseiten der flächigen Elemente an die Anschlussflächen des Verbindungselements kann grundsätzlich in beliebiger Weise erfolgen. Nach einer vorteilhaften Ausgestaltung der Erfindung weisen die Anschlussflächen jedoch Anschlusslaschen auf, die sich im wesentlichen senkrecht zur Oberfläche der Anschlussflächen erstrecken und zur unlösbaren Befestigung der Stirnseiten der flächigen Elemente dienen. Die Anschlusslaschen, die vorzugsweise eine geringere Dicke aufweisen als die zu verbindenden flächigen Elemente, werden vollständig in diese eingebettet und ermöglichen somit eine besonders zuverlässige formschlüssige Verbindung des Verbindungselements mit den flächigen Elementen. Die Verbindung kann durch eine zusätzlich stoffschlüssige Verbindung weiter gesteigert werden.

Für die Form und Ausgestaltung der Anschlusslaschen bestehen grundsätzlich keine Vorgaben, so lange diese eine zuverlässige Anbindung der flächigen Elemente an das Verbindungselemente gewährleisten. Nach einer vorteilhaften Weiterbildung der Erfindung weisen die Anschlusslaschen jedoch über die Länge des Verbindungselements Unterbrechungen auf und/oder sind an ihren Endbereichen abgerundet. Die Unterbrechungen reduzieren den Bereich der flächigen Elemente der mit einer vorteilhafterweise vorzusehenden Ausnehmung für die Anschlusslaschen ausgestattet werden muss, so dass die strukturelle Festigkeit der flächigen Elemente in ihrem Randbereich im wesentlichen erhalten bleibt. Die abgerundeten Endbereiche ermöglichen eine einfache Montage der Verbindungselemente an den flächigen Elementen.

Das Verbindungselement kann in Abhängigkeit von der Form des herzustellenden Möbelstücks in entsprechender Weise ausgestaltet sein. Zur Herstellung der üblicherweise kastenförmigen Möbelstücke weist das Verbindungselement nach einer weiteren Ausgestaltung der Erfindung einen im wesentlichen quadratischen Querschnitt auf, wobei die Anschlussflächen benachbart zueinander angeordnet sind. Das Verbindungselement bildet somit die Kanten des Möbelstücks und erfüllt auch die Funktion eines Kantenschutzes.

Die Anordnung einer Aufnahme bzw. mehrerer Aufnahmen erfolgt entsprechend der ihnen zugedachten Funktionsteile. Gemäß einer weiteren Ausgestaltung der Erfindung weist die erste, in der Einbaulage, d.h. im montierten Zustand des Möbelstücks vorzugsweise eine Ober- oder Unterseite bildende Anschlussfläche, einen Vorsprung, vorzugsweise zwei im Abstand zueinander angeordnete Vorsprünge auf, die die Aufnahme zur Anordnung von Befestigungsmitteln zur lösbaren Verbindung eines zweiten Verbindungselements aufweisen.

Gemäß dieser Ausgestaltung der Erfindung sind die Vorsprünge in entsprechenden Aussparungen der Seitenfläche eines mit den Verbindungselementen herzustellenden Möbelstücks angeordnet und ermöglichen somit die seitliche Verbindung mit weiteren gleichartigen Möbelstücken. Eine vorteilhafterweise vorzusehenden Durchgangsbohrung an dem Vorsprung ist auch im montierten Zustand des Möbelstücks von beiden Seiten, nämlich sowohl von der Innenseite des Möbelstücks als auch von dessen Außenseite her zugänglich. Im Falle der seitlichen Verbindung mit gleichartigen Möbelstücken ist somit der beiderseitige Zugang zu den Befestigungselementen, vorzugsweise Schrauben, gewährleistet. Die Zugänglichkeit ermöglicht es, die Möbelstücke in der Weise aneinander zu befestigen, dass ein sicherer Verbund hergestellt werden kann.

Im Falle der Verwendung eines Vorsprungs ist nach einer vorteilhaften Ausgestaltung der Erfindung eine erste Stirnseite des Vorsprungs bündig mit einer ersten Außenfläche und eine zweite Stirnseite des Vorsprungs oberhalb der Oberseite der zweiten Anschlussfläche angeordnet. Die bündige Anordnung der Stirnseite des Vorsprungs gewährleistet die Herstellung eines seitlich ebenen Möbelstücks und ermöglicht somit eine im wesentlichen abstandslose Verbindung mit weiteren Möbelstücken. An der den Stirnseiten der flächigen Elemente zugewandten Seite steht der Vorsprung von der Oberfläche der zweiten Anschlussfläche vor. Die dadurch gebildete Stufe zwischen der zweiten Stirnseite des Vorsprungs und der Oberseite der zweiten Anschlussfläche dient als Auflage für die die Oberseite oder Unterseite bildenden flächigen Elemente. Die Stufe kann dabei an die Form der Stirnseiten angepasst sein. Vorteilhafterweise ist die Stufe abgeschrägt.

Ebenso wie die Positionierung der Aufnahmen zur Verbindung mindestens zweier Möbelstücke untereinander, so ist auch die Anordnung der Aufnahmen für die Funktionsteile grundsätzlich frei wählbar. Nach einer vorteilhaften Ausgestaltung der Erfindung weist eine der ersten Anschlussfläche gegenüberliegende zweite Außenfläche mindestens eine Aufnahme, vorzugsweise zwei im Abstand zueinander angeordnete Aufnahmen zur Befestigung von Funktionsteilen, wie Koppelungselemente, Bügeln, Distanzelementen, Rollen, Füßen oder dergleichen auf. In der Einbaulage bildet die zweite Außenfläche die Oberseite oder Unterseite des Möbelstücks. Eine gemäß dieser Weiterbildung erfolgende Anordnung der Aufnahmen, ermöglicht eine einfache Anbindung der zu verwendenden Funktionsteile. Die Aufnahmen können dabei standardisiert sein, so dass ein einfacher Austausch entsprechend standardisierter Funktionsteile erfolgen kann.

Nach einer besonders vorteilhaften Ausgestaltung der Erfindung sind die Aufnahmeöffnungen ferner in einer Ausnehmung angeordnet. Diese Ausgestaltung der Erfindung ermöglicht die zuverlässige Anordnung von Blendelementen, die im Falle der Nichtverwendung der Aufnahmen der besonders exponierten Oberseite des unter Verwendung der Verbindungselemente hergestellten Möbelstücke einen optisch einwandfreien Eindruck verschaffen.

Kennzeichnend für das erfindungsgemäße Möbelstück mit vier flächigen Elementen ist die Verwendung eines Verbindungselements gemäß einem oder mehreren der Ansprüche 1-11. Das erfindungsgemäße Möbelstück weist den Vorteil einer besonders hohen Variabilität auf. Es lässt sich in optisch ansprechender Weise mit entsprechenden Möbelstücken zu einem Verbund zusammenfügen. Darüber hinaus ermöglichen die Aufnahmeöffnungen die Anpassung der Möbelstücke an die gewünschte Funktion.

Zur Herstellung eines besonders stabilen Möbelstücks weisen die den Verbindungselementen zugewandten Stirnseiten der flächigen Elemente Aussparungen zur Aufnahme von Anschlusslaschen auf. Darüber hinaus können nach einer besonders vorteilhaften Ausgestaltung der Erfindung die Seitenflächen Aussparungen zur Aufnahme von Vorsprüngen an den Verbindungselementen aufweisen.

Nachstehend wird ein Ausführungsbeispiel der Erfindung anhand der Zeichnungen beschrieben. In den Zeichnungen zeigen:
- Fig. 1: eine perspektivische Ansicht eines Verbindungselements;
- Fig. 2: eine weitere perspektivische Ansicht des Verbindungselements von Fig. 1;
- Fig. 3: eine Draufsicht auf das Verbindungselement von Fig. 1;
- Fig. 4a: eine Explosionsdarstellung eines kastenförmigen Möbelstücks ohne Verbindungselemente;
- Fig. 4b: eine perspektivische Ansicht des kastenförmigen Möbelelements von Fig. 4a ohne Verbindungselemente;
- Fig. 4c: eine perspektivische Ansicht des Möbelstücks von Fig. 4b mit zur Montage vorgesehenen Verbindungselementen und
- Fig. 4d: eine perspektivische Ansicht des montierten Möbelstücks von Fig. 4a.

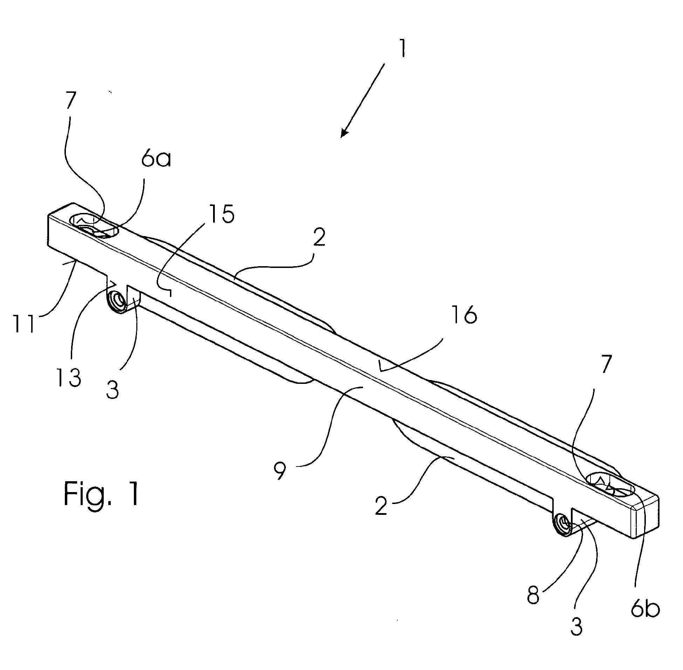

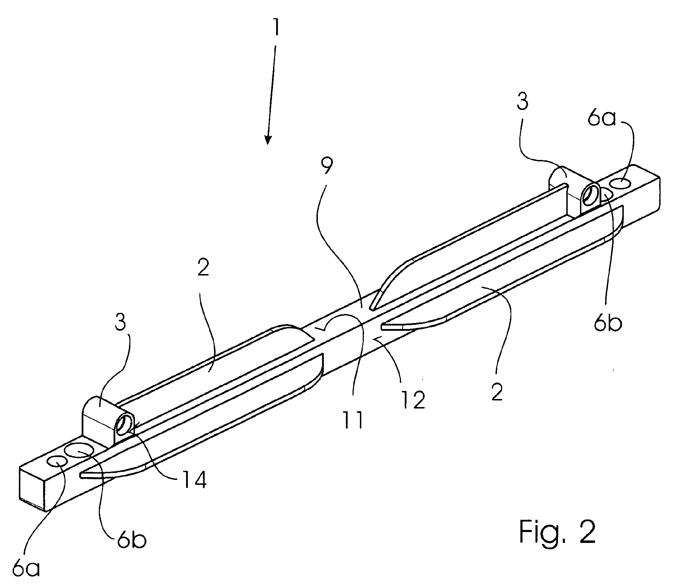

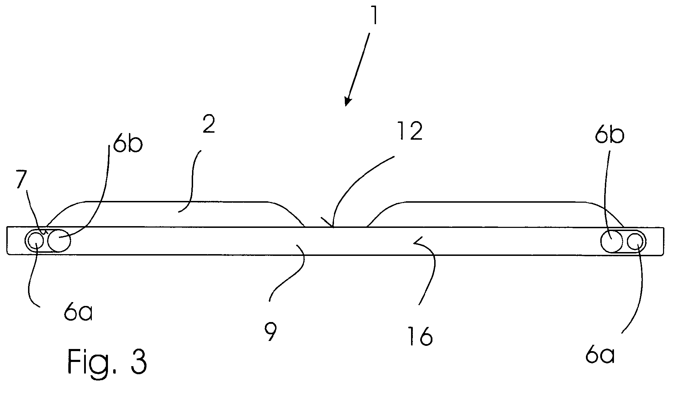

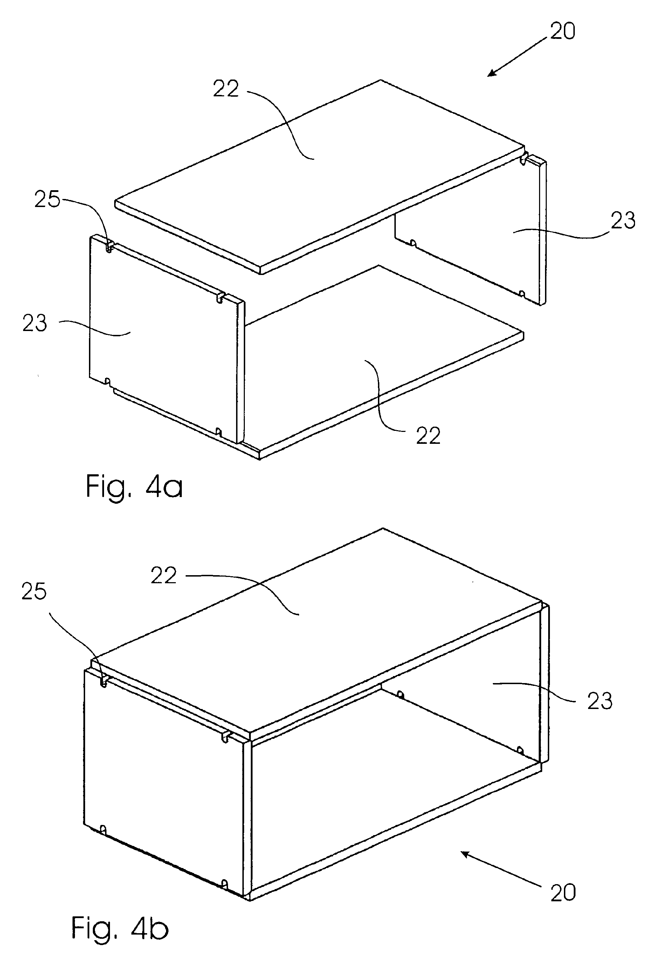

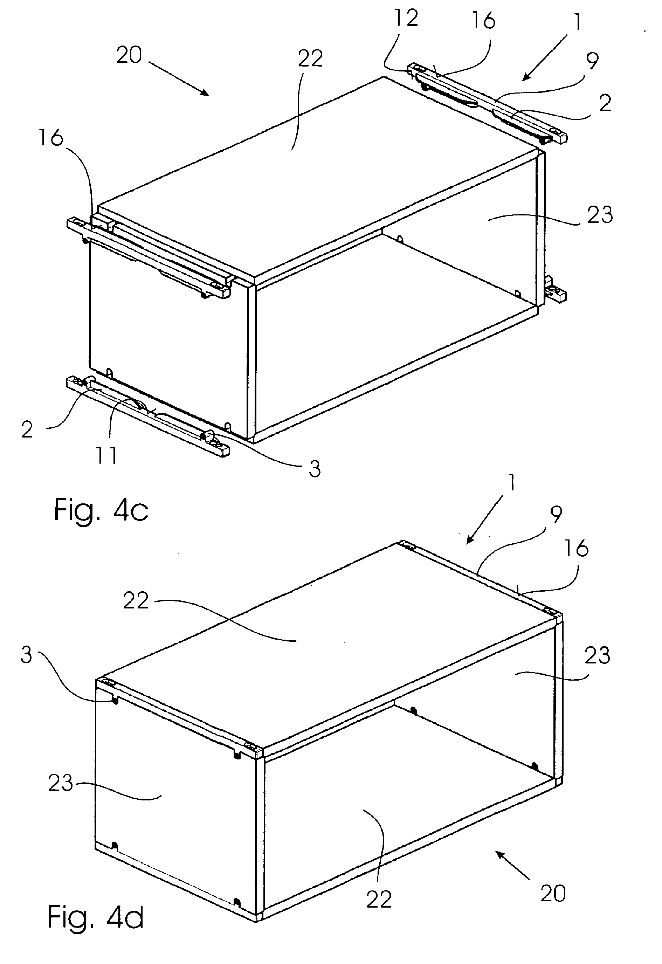

Die Fig. 1-3 zeigen ein Verbindungselement 1 zur Herstellung eines in den Fig. 4a-4d dargestellten kastenförmigen Möbelstücks 20 aus vier flächigen Elementen, nämlich den Seitenflächen 23 und den Ober- und Unterseiten 22.

Das Verbindungselement 1 weist einen im Querschnitt quadratischen Grundkörper 9 auf. Zur Befestigung der Stirnflächen der Seitenflächen 23 und der Ober- und Unterseiten 22 mit dem Verbindungselement 1 weist dieses an einer ersten Anschlussfläche 11 und einer an dem Grundkörper 9 benachbart zu dieser angeordneten zweiten Anschlussfläche 12 senkrecht vorstehende Anschlusslaschen 2 auf, die in entsprechenden, hier nicht dargestellten Aussparungen an den Stirnseiten der Ober- und Unterseiten 22 und Seitenflächen 23 angeordnet werden. Die Anschlusslaschen 2 sind zweiteilig ausgebildet und an ihren Enden abgerundet, wodurch die Montage erleichtert und einem Ausbrechen vorgebeugt wird. Zur Herstellung einer unlösbaren Verbindung werden die Anschlusslaschen 2 zusätzlich in den Aussparungen verklebt.

An der in der Einbaulage der Seitenfläche 23 zugewandten ersten Anschlussfläche 11 weist das Verbindungselement 1 zwei im Abstand zueinander angeordnete Vorsprünge 3 auf. Diese sind im zusammengebauten Zustand des Möbelstücks 20 in entsprechenden Ausnehmungen 25 der Seitenflächen 23 angeordnet und verleihen dem montierten Möbelstück 20 eine besonders hohe Stabilität.

Zur Verbindung zweier Möbelstücke 20 an ihren Seitenflächen 23 weisen die Vorsprünge 3 Durchgangsbohrungen 8 auf, die zur Aufnahme von hier nicht dargestellten Befestigungsschrauben ausgebildet sind. Diese erstrecken sich ggf. durch die Durchgangsbohrungen 8 der benachbart zueinander anzuordnenden Möbelstücke 20. Aufgrund der Anordnung der Durchgangsbohrungen 8 in den Vorsprüngen 3 sind diese auch von der Innenseite des Möbelstücks 20 her zugänglich, so dass die Befestigungsschrauben problemlos montiert und angezogen werden können.

An der die Ober- oder Unterseite 22 des Möbelstücks 20 bildenden zweiten Außenfläche 16 des Verbindungselement 1 sind im Endbereich Ausnehmungen 7 angeordnet, in denen jeweils eine Durchgangsbohrung 6a sowie eine Gewindebohrung 6b angeordnet ist. Diese dienen zur Aufnahme von hier nicht dargestellten Funktionsteilen. Für den Fall, dass die zweite Außenfläche 16 eine Unterseite des Möbelstücks 20 bildet, dienen diese Bohrungen 6a, 6b zur Aufnahme von Füßen oder Rollen. Für den Fall, dass die zweite Außenfläche 16 die Oberseite des Möbelstücks 20 bildet können dort Distanzhalter oder dergleichen angeordnet werden. Die Ausnehmung 7 ermöglicht eine gute Befestigung eines hier nicht dargestellten Blendelements.

Eine erste Stirnseite 13 des Vorsprungs 3 verläuft bündig zu einer ersten Außenfläche 15 des Verbindungselements 1. Die der ersten Stirnseite 13 gegenüberliegende zweite Stirnseite 14 des Vorsprungs 3 steht hingegen von der zweiten Anschlussfläche 12 vor. Die Schräge zwischen der ersten Stirnseite 13 und der zweiten Außenfläche 12 bildet damit eine Anschlagfläche für die entsprechend ausgestalteten Stirnseiten der flächigen Elemente 22, 23.

## Patentansprüche

1. Verbindungselement zum Herstellen von Möbelstücken aus flächigen Elementen, mit mindestens einer ersten Anschlussfläche und einer zweiten Anschlussfläche, die jeweils zur Befestigung einer Stirnseite eines Elements ausgebildet sind, **dadurch gekennzeichnet, dass** an dem Verbindungselement (1) mindestens eine Aufnahme (6a, 6b, 8) zur lösbaren Befestigung eines weiteren Verbindungselements (1) und/oder eines Funktionsteils ausgebildet ist.

2. Verbindungselement nach Anspruch 1, **dadurch gekennzeichnet, dass** die Anschlussflächen (10, 11) zur unlösbaren Befestigung der Elemente (22, 23) Anschlusslaschen (2) aufweisen, die sich im wesentlichen senkrecht zur Oberfläche der Anschlussflächen (10, 11) erstrecken.

3. Verbindungselement nach Anspruch 1 oder 2, **dadurch gekennzeichnet, dass** die Anschlusslaschen (2) Unterbrechungen aufweisen.

4. Verbindungselement nach einem der vorhergehenden Ansprüche, **dadurch gekennzeichnet, dass** die Anschlusslaschen (2) an ihren Endbereichen abgerundet sind.

5. Verbindungselement nach einem der vorhergehenden Ansprüche, **gekennzeichnet durch** einen im wesentlichen rechteckigen Querschnitt, wobei die Anschlussflächen (10, 11) benachbart zueinander angeordnet sind.

6. Verbindungselement nach einem der vorhergehenden Ansprüche, **dadurch gekennzeichnet, dass** die erste, in der Einbaulage vorzugsweise eine Ober- oder Unterseite bildende Anschlussfläche (11), einen Vorsprung (3), vorzugsweise zwei im Abstand zueinander angeordnete Vorsprünge (3), aufweist, die zur Aufnahme von Befestigungsmitteln zur lösbaren Verbindung eines zweiten Verbindungselement (1) ausgebildet sind.

7. Verbindungselement nach einem der vorhergehenden Ansprüche, **dadurch gekennzeichnet, dass** die Vorsprünge (3) Durchgangsbohrungen (8) aufweisen, die vorzugsweise parallel zur ersten Anschlussfläche (11) verlaufen.

8. Verbindungselement nach einem der vorhergehenden Ansprüche, **dadurch gekennzeichnet, dass** eine ersten Stirnseite (13) des Vorsprungs (3) bündig mit einer ersten Außenfläche (15) und eine zweite Stirnseite (14) des Vorsprungs (3) oberhalb der Oberseite einer zweiten Anschlussfläche (12) angeordnet ist.

9. Verbindungselement nach einem der vorhergehenden Ansprüche, **dadurch gekennzeichnet, dass** der Verbindungsbereich zwischen der Oberseite der zweiten Anschlussfläche (12) und der zweiten Stirnseite (14) abgeschrägt ist.

10. Verbindungselement nach einem der vorhergehenden Ansprüche, **dadurch gekennzeichnet, dass** eine der ersten Anschlussfläche (11) gegenüberliegende Außenfläche (16) mindestens eine Aufnahme (6a, 6b), vorzugsweise zwei im Abstand zueinander angeordnete Aufnahmen (6a, 6b) zur Befestigung von Funktionsteilen, wie Koppelungselementen, Bügeln, Distanzelementen, Rollen, Füßen oder dergleichen aufweist.

11. Verbindungselement nach einem der vorhergehenden Ansprüche, **dadurch gekennzeichnet, dass** die Aufnahme (6a, 6b) in einer Ausnehmung (7) angeordnet sind.

12. Möbelstück mit vier flächigen Elementen, die mit Verbindungselementen derart aneinander befestigt sind, dass sie einen kastenförmigen Körper bilden, **dadurch gekennzeichnet, dass** die Verbindungselemente (1) gemäß einem oder mehreren der Ansprüche 1-11 ausgebildet sind.

13. Möbelstück nach Anspruch 12, **dadurch gekennzeichnet, dass** die den Verbindungselementen (1) zugewandten Stirnseiten der flächigen Elemente (22, 23) Aussparungen zur Aufnahme von Anschlusslaschen (2) aufweisen.

14. Möbelstück nach Anspruch 12 oder 13, **dadurch gekennzeichnet, dass** an den Stirnseiten der Seitenflächen (23) Aussparungen (25) zur Aufnahme von Vorsprüngen (3) ausgebildet sind.
